(19) Europäisches Patentamt
European Patent Office
Office européen des brevets

(11) EP 3 429 356 B1

(12) EUROPEAN PATENT SPECIFICATION

(45) Date of publication and mention of the grant of the patent:
**22.04.2020 Bulletin 2020/17**

(21) Application number: **17709451.3**

(22) Date of filing: **13.03.2017**

(51) Int Cl.:
***A01P 3/00*** *(2006.01)* ***A01N 43/54*** *(2006.01)*
***A01N 37/02*** *(2006.01)*

(86) International application number:
**PCT/EP2017/055764**

(87) International publication number:
**WO 2017/157814 (21.09.2017 Gazette 2017/38)**

# (54) METHOD TO CONTROL PYRIMETHANIL TOLERANT FUNGI

VERFAHREN ZUR BEKÄMPFUNG VON PYRIMETHANILTOLERANTEN PILZEN

PROCÉDÉ POUR CONTRÔLER DES CHAMPIGNONS TOLÉRANTS AU PYRIMÉTHANILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **14.03.2016 EP 16160132**

(43) Date of publication of application:
**23.01.2019 Bulletin 2019/04**

(73) Proprietor: **Janssen Pharmaceutica NV**
**2340 Beerse (BE)**

(72) Inventors:
- **DE BOLLE, Miguel, Francesco, Coleta**
  **2340 Beerse (BE)**
- **BARKER, Martyn, Charles**
  **2340 Beerse (BE)**
- **VERHEYEN, Dimitri, Dennis, Paul**
  **2340 Beerse (BE)**

(74) Representative: **Verberckmoes, Filip Gerard**
**Johnson & Johnson**
**Patent Law Department**
**Turnhoutseweg 30**
**2340 Beerse (BE)**

(56) References cited:
**US-A1- 2010 137 337**

- **GREEN S A ET AL: "INFLUENCE OF FORMULANTS AND SALT FORMATION ON VOLATILISATION AND ACTIVITY OF PYRIMETHANIL", PESTICIDE SCIENCE, ELSEVIER APPLIED SCIENCE PUBLISHER. BARKING, GB, vol. 54, no. 3, 1 January 1998 (1998-01-01), page 313/314, XP000857639, ISSN: 0031-613X, DOI: 10.1002/(SICI)1096-9063(1998110)54:3<313:: AID-PS836>3.3.CO;2-C**
- **M.O. LEYVA ET AL: "Preventive and post-infection control of Botrytis cinerea in tomato plants by hexanoic acid", PLANT PATHOLOGY, vol. 57, 2008, pages 1038-1046, XP002757508, DOI: 10.1111/j.1365-3059.2008.01891.x**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 429 356 B1

## Description

The present invention relates to a method for controlling pyrimethanil-resistant or pyrimethanil-tolerant fungi, or restoring sensitivity to pyrimethanil in pyrimethanil-resistant or pyrimethanil-tolerant fungi, by contacting said fungi with a composition comprising a combination of pyrimethanil and an alkane carboxylic acid of formula $CH_3-(CH_2)_n-COOH$ wherein n is 4 to 7 whereby the ratio by weight of pyrimethanil to the alkane carboxylic acid of formula $CH_3-(CH_2)_n-COOH$ is from 1/10 to 1/100. Furthermore, the present invention also relates to a method for protecting materials, plants, seeds, crops or fruits that are at risk of being infested with pyrimethanil-resistant fungi or pyrimethanil-tolerant fungi by contacting said materials, plants, seeds, crops or fruits with a composition comprising a combination of pyrimethanil and an alkane carboxylic acid $CH_3-(CH_2)_n-COOH$ wherein n is 4 to 7 whereby the ratio by weight of pyrimethanil to the alkane carboxylic acid of formula $CH_3-(CH_2)_n-COOH$ is from 1/10 to 1/100.

Microorganisms are extremely useful, and even indispensable, in processes such as, e.g. alcoholic fermentation, ripening of cheese, baking of bread, production of penicillin, purification of waste water, production of biogas, and the like. However, microorganisms can also be harmful or highly dangerous; by causing infectious diseases, by forming poisonous or carcinogenic metabolites and by attacking valuable materials, disturbing production processes, or impairment of the quality of products.

Pyrimethanil, component (I), is a contact fungicide that inhibits methionine biosynthesis and has protective and curative properties. It can be applied as a seed treatment or as a foliar spray to a number of crops. Pyrimethanil prevents diseases caused by a wide spectrum of fungi, including *Alternaria* spp., *Botrytis* cinerea, *Cercospora* spp., *Cladosporium* spp., *Colletotrichum* spp., *Monilia* spp., *Mycosphaerella* spp., *Penicillium* spp. and *Venturia* spp.. Pyrimethanil (I) is the generic name for 4,6-dimethyl-*N*-phenyl-2-pyrimidinamine, which may be represented by the formula

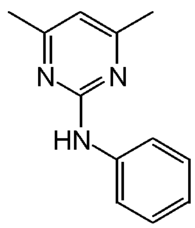

(I) .

Green et al, Pesticide Science, vol.54, no. 3, 1998, pages 313-314 describes the influence of formulants and salt formation on volatilisation and activity of pyrimethanil. US 2010/137337 describes co-crystals of pyrimethanil and a co-crystal forming compound which has at least one organic acid functional group. Unfortunately fungi can develop resistance against pyrimethanil resulting in the need to increase the amount of pyrimethanil used or even requiring the use of a different fungicide. Hence there is the need to control such pyrimethanil-resistant or pyrimethanil-tolerant fungi or to restore the sensitivity of pyrimethanil-resistant or pyrimethanil-tolerant fungi to pyrimethanil.

It has now been found that pyrimethanil-resistant or pyrimethanil-tolerant fungi can be controlled, or their sensitivity to pyrimethanil can be restored, by the addition of an alkane carboxylic acid of formula $CH_3-(CH_2)_n-COOH$ wherein n is 4 to 7 to a composition comprising pyrimethanil. This finding is very surprising since these alkane carboxylic acids of formula $CH_3-(CH_2)_n-COOH$ wherein n is 4 to 7 have little to no fungicidal activity.

The alkane carboxylic acids of formula $CH_3-(CH_2)_n-COOH$ wherein n is 4 to 7 (hereinafter referred to as a component II) have the following structure :

| n | Structure | Name | Component (II) |
|---|---|---|---|
| 4 | $CH_3-(CH_2)_4-COOH$ | hexanoic acid | (II-a) |
| 5 | $CH_3-(CH_2)_5-COOH$ | heptanoic acid | (II-b) |
| 6 | $CH_3-(CH_2)_6-COOH$ | octanoic acid | (II-c) |
| 7 | $CH_3-(CH_2)_7-COOH$ | nonanoic acid | (II-d) |

Pyrimethanil (I) may be present in free base form or in the form of an acid addition salt, the latter being obtained by reaction of the base form with an appropriate acid. Appropriate acids comprise, for example, inorganic acids, such as the hydrohalic acids, *i.e.* hydrofluoric, hydrochloric, hydrobromic and hydroiodic, sulfuric acid, nitric acid, phosphoric acid, phosphinic acid and the like; or organic acids, such as, for example, acetic, propanoic, hydroxyacetic, 2-hydroxypropanoic, 2-oxo-propanoic, ethanedioic, propanedioic, butanedioic, (Z)-2-butenedioic, (E)-2-butenedioic, 2-hydroxybutanedioic, 2,3-dihydroxybutanedioic, 2-hydroxy-1,2,3-propane-tricarboxylic, methanesulfonic, ethanesulfonic, benzenesulfonic, 4-methylbenzenesulfonic, cyclohexanesulfamic, 2-hydroxybenzoic, 4-amino-2-hydroxy-benzoic and the like acids.

The relative proportions by weight of component (II) - *i.e.* the alkane carboxylic acid of formula $CH_3$-$(CH_2)_n$-COOH wherein n is 4 to 7 - to component (I) - *i.e.* pyrimethanil - that is needed to restore the sensitivity of pyrimethanil-resistant or pyrimethanil-tolerant fungi to pyrimethanil or to control pyrimethanil-resistant or pyrimethanil-tolerant fungi is from 100/1 to 10/1.

In an embodiment the present invention provides a method for controlling pyrimethanil-resistant fungi or pyrimethanil-tolerant fungi by contacting said fungi with a composition comprising a combination of pyrimethanil and an alkane carboxylic acid of formula $CH_3$-$(CH_2)_n$-COOH wherein n is 4 to 7 whereby the ratio by weight of pyrimethanil to the alkane carboxylic acid of formula $CH_3$-$(CH_2)_n$-COOH is from 1/10 to 1/100. Other ratios by weight of pyrimethanil to the alkane carboxylic acid of formula $CH_3$-$(CH_2)_n$-COOH wherein n is 4 to 7 are from 1/25 to 1/75 or from 1/25 to 1/50.

The present invention also provides a method for protecting materials, plants, seeds, crops or fruits that are at risk of being infested with pyrimethanil-resistant fungi or pyrimethanil-tolerant fungi by contacting said materials, plants, seeds, crops or fruits with a composition comprising a combination of pyrimethanil and an alkane carboxylic acid of formula $CH_3$-$(CH_2)_n$-COOH wherein n is 4 to 7 whereby the ratio by weight of pyrimethanil to the alkane carboxylic acid of formula $CH_3$-$(CH_2)_n$-COOH is from 1/10 to 1/100. Other ratios by weight of pyrimethanil to the alkane carboxylic acid of formula $CH_3$-$(CH_2)_n$-COOH wherein n is 4 to 7 are from 1/25 to 1/75 or from 1/25 to 1/50.

The present invention further provides a method of overcoming resistance to pyrimethanil in pyrimethanil-resistant or pyrimethanil-tolerant fungi comprising contacting the pyrimethanil-resistant or pyrimethanil-tolerant fungi with of a composition comprising a combination of pyrimethanil and an alkane carboxylic acid of formula $CH_3$-$(CH_2)_n$-COOH wherein n is 4 to 7 whereby the ratio by weight of pyrimethanil to the alkane carboxylic acid of formula $CH_3$-$(CH_2)_n$-COOH is from 1/10 to 1/100. Other ratios by weight of pyrimethanil to the alkane carboxylic acid of formula $CH_3$-$(CH_2)_n$-COOH wherein n is 4 to 7 are from 1/25 to 1/75 or from 1/25 to 1/50.

In another embodiment the present invention relates to :

- the use of a combination of pyrimethanil and an alkane carboxylic acid of formula $CH_3$-$(CH_2)_n$-COOH wherein n is 4 to 7 whereby the ratio by weight of pyrimethanil to the alkane carboxylic acid of formula $CH_3$-$(CH_2)_n$-COOH is from 1/10 to 1/100 for reducing resistance to pyrimethanil in the treatment of pyrimethanil-resistant fungi;
- the use of a combination of pyrimethanil and an alkane carboxylic acid of formula $CH_3$-$(CH_2)_n$-COOH wherein n is 4 to 7 whereby the ratio by weight of pyrimethanil to the alkane carboxylic acid of formula $CH_3$-$(CH_2)_n$-COOH is from 1/10 to 1/100 for restoring sensitivity against pyrimethanil in the treatment of pyrimethanil-resistant or pyrimethanil-tolerant fungi;
- the use of a combination of pyrimethanil and an alkane carboxylic acid of formula $CH_3$-$(CH_2)_n$-COOH wherein n is 4 to 7 whereby the ratio by weight of pyrimethanil to the alkane carboxylic acid of formula $CH_3$-$(CH_2)_n$-COOH is from 1/10 to 1/100 for reducing the level of resistance to pyrimethanil in pyrimethanil-resistant or pyrimethanil-tolerant fungi; and
- the use of a combination of pyrimethanil and an alkane carboxylic acid of formula $CH_3$-$(CH_2)_n$-COOH wherein n is 4 to 7 whereby the ratio by weight of pyrimethanil to the alkane carboxylic acid of formula $CH_3$-$(CH_2)_n$-COOH is from 1/10 to 1/100 for managing the control of pyrimethanil-resistant or pyrimethanil-tolerant fungi.

In a further embodiment the present invention relates to a composition for use in the treatment of pyrimethanil-resistant fungi comprising a combination of pyrimethanil and an alkane carboxylic acid of formula $CH_3$-$(CH_2)_n$-COOH wherein n is 4 to 7 whereby the ratio by weight of pyrimethanil to the alkane carboxylic acid of formula $CH_3$-$(CH_2)_n$-COOH is from 1/10 to 1/100, and one or more carriers. Other ratios by weight of pyrimethanil to the alkane carboxylic acid $CH_3$-$(CH_2)_n$-COOH wherein n is 4 to 7 are from 1/25 to 1/75 or from 1/25 to 1/50.

The compositions of the present invention are useful to protect culture plants, or parts of plants, e.g. fruit, blossoms, flowers, foliage, stems, roots, cuttings, tubers of plants, and seeds against fungal attack. Post-harvest treatment of harvested crops against phytopathogenic fungi can prevent or reduce certain post-harvest storage disorders such as e.g. scald, scorch, softening, senescent breakdown, lenticel spots, bitter pit, browning, water core, vascular breakdown and the like.

As examples of the wide variety of culture plants in which the combinations of components (I) and (II) according to the present invention can be used, there may be named for example cereals, e.g. wheat, barley, rye, oats, rice, sorghum and the like; beets, e.g. sugar beet and fodder beet; pome and stone fruit and berries, e.g. apples, pears, plums, peaches, almonds, cherries, strawberries, raspberries and blackberries; leguminous plants, e.g. beans, lentils, peas, soy beans; oleaginous plants, e.g. rape, mustard, poppy, olive, sunflower, coconut, castor oil plant, cocoa, groundnuts; cucurbitaceae, e.g. pumpkins, gherkins, melons, cucumbers, squashes; fibrous plants, e.g. cotton, flax, hemp, jute; citrus fruit, e.g. orange, lemon, grapefruit, mandarin; vegetables, e.g. spinach, lettuce, asparagus, brassicaceae

such as cabbages and turnips, carrots, onions, tomatoes, potatoes, hot and sweet peppers; laurel-like plants, e.g. avocado, cinnamon, camphor tree; or plants such as maize, tobacco, nuts, coffee, sugarcane, tea, vines, hops, bananas, rubber plants, as well as ornamental plants, e.g. flowers, shrubs, deciduous trees and evergreen trees such as conifers. This enumeration of culture plants is given with the purpose of illustrating the invention and not to delimiting it thereto.

The compositions of the present invention are also useful in the preservation of wood, wood products, leather, natural or synthetic textile, fibres, non-wovens, technical textile, plasticized materials and non-plasticized thermoplastics as polypropylene, polyvinylchloride, etc..., paper, wall paper, insulation material, laminates, amino moulding compounds, paints and coatings, fabrics, floor coverings, synthetic fibres like plasticized polymers, hessian, rope and cordage and biodegradable materials and protect said materials against attack and destruction by bacteria or fungi. As wood or wood products which can be preserved with the compositions according to the present invention is considered, for example, wood products such as timber, lumber, railway sleepers, telephone poles, fences, wood coverings, wicker-work, windows and doors, plywood, particle board, waferboards, chipboard, joinery, timber used above ground in exposed environments such as decking and timber used in ground contact or fresh water or salt water environments, bridges or wood products which are generally used in housebuilding, construction and carpentry. As biodegradable materials besides wood which can benefit from treatment with the compositions of the invention include cellulosic material such as cotton.

The compositions of the present invention are also useful in the prevention of microbial contamination or biofilm formation in several industrial processes like gaskets, pipes and tubing in contact with fluids or involved in fluid transport, conveyer belts, surfaces and plastic components used in food transport, processing or production, and medical activities like medical equipment and devices like catheters, pacemakers, implants, surgery equipment and sterile textile.

The compositions of the present invention are also useful to protect engineering materials against microorganisms. Engineering materials which are intended to be protected can be glues, sizes, paints and plastic articles, cooling lubricants, aqueous hydraulic fluids and other non-living materials which can be infested with, or decomposed by, microorganisms.

The compositions according to the present invention comprising a combination of component (I), pyrimethanil, and component (II), an alkane carboxylic acid of formula $CH_3-(CH_2)_n-COOH$ wherein n is 4 to 7, whereby the ratio by weight of pyrimethanil to the alkane carboxylic acid of formula $CH_3-(CH_2)_n-COOH$ is from 1/10 to 1/100 furthermore comprise one or more acceptable carriers.

These carriers are any material or substance with which the composition of components (I) and (II) is formulated in order to facilitate its application/dissemination to the locus to be treated, for instance by dissolving, dispersing, or diffusing the said composition, and/or to facilitate its storage, transport or handling without impairing its antifungal effectiveness. Said acceptable carriers may be a solid or a liquid or a gas which has been compressed to form a liquid including the physical condition described as supercritical fluid, *i.e.* the compositions of this invention can suitably be used as concentrates, emulsions, emulsifiable concentrates, oil miscible suspension concentrates, oil-miscible liquid, soluble concentrates, solutions, granulates, dusts, sprays, aerosols, pellets, or powders.

Appropriate carriers and adjuvants for use in the compositions of the present invention may be solid or liquid and correspond to suitable substances known in the art of formulation, such as, for example natural or regenerated mineral substances, solvents, dispersants, surfactants, wetting agents, adhesives, thickeners, binders, fertilizers or antifreeze agents.

In many instances the compositions to be used directly can be obtained from concentrates, such as e.g. emulsifiable concentrates, suspension concentrates, or soluble concentrates, upon dilution with aqueous or organic media, such concentrates being intended to be covered by the term composition as used in the definitions of the present invention. Such concentrates can be diluted to a ready to use mixture in a spray tank shortly before use. Preferably the compositions of the invention should contain from about 0.01 to 95% by weight of the combination of components (I) and (II). More preferably this range is from 0.1 to 90% by weight. Most preferably this range is from 1 to 80% by weight, depending on the type of formulation to be selected for specific application purposes, as further explained in details hereinafter.

An emulsifiable concentrate is a liquid, homogeneous formulation of the components (I) and (II) to be applied as an emulsion after dilution in water.

A suspension concentrate is a stable suspension of the active ingredients in a fluid intended for dilution with water before use. A soluble concentrate is a liquid, homogeneous formulation to be applied as a true solution of the active ingredients after dilution in water.

The compositions according to the present invention can be of use in post-harvest treatment of crops, in particular fruit. In the latter instance, the fruit will be sprayed with or dipped or drenched into a liquid formulation or the fruit may be coated with a waxy composition. The latter waxy composition conveniently is prepared by thoroughly mixing a suspension concentrate with a suitable wax. The formulations for spray, dip or drench applications may be prepared upon dilution of a concentrate such as, e.g. an emulsifiable concentrate, a suspension concentrate or a soluble liquid, with an aqueous medium. Such concentrate in most instances consists of the active ingredients, a dispersing or suspending agent (surfactant), a thickening agent, a small amount of organic solvent, a wetting agent, optionally some anti-freeze agent, and water.

The biocidal compositions of the present invention can also be used for protecting seed against fungi. To that effect the present fungicidal compositions can be coated on seed, in which case the seed grains are drenched consecutively with a liquid composition of the active ingredients or if they are coated with a previously combined composition. The compositions can also be sprayed or atomised onto the seed using e.g. a spinning disc atomiser.

## Experimental part

### Experiment 1: poison plate assay

Name of component (I): pyrimethanil

Name of component (II): hexanoic acid ( = $CH_3$-$(CH_2)_n$-COOH wherein n is 4)

Test setup : to each well of a 24-well microtiter plate, 2 ml of Glucose Agar (GA : 10 g glucose, 1.5 g $K_2HPO_4$, 2 g $KH_2PO_4$, 1 g $(NH_4)_2SO_4$, 0.5 g $MgSO_4$ and 12.5 g agar in 1 litre deionised water) is added. The test compounds pyrimethanil as well as an alkane carboxylic acid (II) are dissolved in DMSO at the appropriate concentration and added to the liquid agar in a 5 $\mu$l droplet each. The nutrient medium is inoculated with the test fungi by adding 2.5 $\mu$l of a spore/mycelium suspension. The microwell plates are then incubated in the dark at 20°C and 60 % relative humidity. The growth of the fungi is evaluated after two weeks, when the growth diameter of untreated controls has reached 15 mm.

Pathogens (fungi) used as representative model organisms for pyrimethanil-resistant fungi or pyrimethanil-tolerant fungi:

- *Penicillium* expansum strain PE110014, pyrimethanil-resistant ($EC_{50}$ = 15.40 ppm, $EC_{95}$ >100 ppm)
- *Penicillium* expansum strain PE110030, pyrimethanil-resistant ($EC_{50}$ = 16.38 ppm, $EC_{95}$ >100 ppm)
- *Penicillium* expansum strain PE110048, pyrimethanil-resistant ($EC_{50}$ = 22.39 ppm, $EC_{95}$ >100 ppm)

(For comparison, a pyrimethanil-sensitive strain like *Penicillium* expansum PE110101 has $EC_{50}$ = 0.29 ppm and $EC_{95}$ = 0.88 ppm, while a pyrimethanil-tolerant one like *Penicillium* expansum PE110091 has $EC_{50}$ = 5.01 ppm and $EC_{95}$ = 74.99 ppm).

Evaluation :

After a suitable incubation period, colony diameters on the agar are measured. Percentage growth (not % effect, see below) is then calculated for each treatment by comparing the colony diameter with the diameter for untreated controls (which is 15 mm).

calculation :

The effect of adding an alkane carboxylic acid of formula $CH_3$-$(CH_2)_n$-COOH (wherein n is 4 to 7) to restore sensitivity of pyrimethanil-resistant or pyrimethanil-tolerant fungi to pyrimethanil was calculated using the Colby synergy formula (Colby S.R., Weeds (1967), 15(1), 20-22).
When **a** is the % growth (not the% activity) still observed under treatment with compound A alone at a given concentration and **b** is the % growth still observed under treatment with compound B alone at a given concentration, the expected growth **exp** under treatment with the combination of both compounds at the same concentrations is :

$$\mathbf{exp} = (\mathbf{a} \times \mathbf{b}) / 100.$$

When the observed growth of the test pathogens under the combination is less than the expected growth, there is synergy.

Abbreviations:

exp: expected growth of the test pathogens as calculated using Colby's formula;
obs : observed growth of the test pathogens.

**Table 1**: % growth of pyrimethanil-resistant fungi PE110014, PE110030 and PE110048 on glucose agar medium challenged with pyrimethanil (0 and 10 ppm) and hexanoic acid (0, 250, 500 and 750 ppm)

| | | | | |
|---|---|---|---|---|
| PE110014, % growth | | observed growth | | |
| | | pyrimethanil | | |
| | | *0 ppm* | *10 ppm* | |
| hexanoic acid | *0 ppm* | 100 | 67 | exp |
| | *250 ppm* | 100 | **60** | 67 |
| | *500 ppm* | 100 | **60** | 67 |
| | *750 ppm* | 100 | **53** | 67 |
| PE110030, % growth | | observed growth | | |
| | | pyrimethanil | | |
| | | *0 ppm* | *10 ppm* | |
| hexanoic acid | *0 ppm* | 100 | 80 | exp |
| | *250 ppm* | 100 | **53** | 80 |
| | *500 ppm* | 100 | **40** | 80 |
| | *750 ppm* | 100 | **40** | 80 |
| | | observed growth | | |
| | | pyrimethanil | | |
| | | *0 ppm* | *10 ppm* | |
| hexanoic acid | *0 ppm* | 100 | 53 | exp |
| | *250 ppm* | 100 | **47** | 53 |
| | *500 ppm* | 100 | **33** | 53 |
| | *750 ppm* | 100 | **20** | 53 |

In Table 1 it can be seen that hexanoic acid when tested alone at 250, 500 and 750 ppm has no fungicidal effect against the three pyrimethanil-resistant fungi (column with 0 ppm pyrimethanil). When hexanoic acid is added to pyrimethanil, the observed growth of the pyrimethanil-resistant fungi is lower than the expected growth thereby demonstrating the ability of hexanoic acid to restore sensitivity to pyrimethanil.

**Experiment 2** : **treatment of fruit**

Test objects :

untreated apples or pears (details below), inoculated with fungal pathogens by wounding the fruits with a contaminated pricker on two spots, and incubated at 20°C and 96% relative humidity.
Pathogens (fungi) used as representative model organisms for pyrimethanil-resistant fungi or pyrimethanil-tolerant fungi :

- *Penicillium* expansum strain PE110091, pyrimethanil-tolerant ($EC_{50}$ = 5.01 ppm, $EC_{95}$ = 74.99 ppm)

Treatment:

Preventive: fruits are dipped for 30 seconds in tap water containing the appropriate concentration of the test compounds. One hour later, the treated fruits are infected with a pricker dipped in a spore suspension of the test fungus.
Curative: fruits are first infected with a pricker and treated by dipping four hours later.

Evaluation :

After a suitable incubation period, the diameters of the infected spots are measured with a calliper. The average diameter is calculated for all spots in the same treatment (between 14 and 40 spots per treatment, see below). Percentage effect of the treatment is then calculated by comparing the average spot diameter with the average for untreated controls. A higher percentage effect demonstrates a higher effect on the reduction of fungal growth.

Calculation :

The effect of adding an alkane carboxylic acid of formula $CH_3-(CH_2)_n-COOH$ (wherein n is 4 to 7) to restore sensitivity of pyrimethanil-resistant or pyrimethanil-tolerant fungi to pyrimethanil was calculated using the Limpel synergy formula (Limpel, L.E. et al. (1962) "Weed control by dimethyl tetrachloroterephthalate alone and in certain combinations", Proceedings of the N. E. Weed Control Conference 16: 48-53).
When a is the % effect obtained by compound A alone at a given concentration and **b** is the % effect obtained by compound B alone at a given concentration, the expected effect **e** of the combination of both compounds at the same concentrations is : **e** = **a** + **b** - (**a** x **b**)/100.
When the observed effect of the combination is higher than the expected effect, there is synergy thereby indicating that sensitivity to pyrimethanil has been restored.

Formulation :

Pyrimethanil was added to tap water as a 40% commercially available PENBOTEC 400SC formulation to obtain a concentration of 100 ppm pyrimethanil.
The alkanoic acid was added to tap water to obtain a 2000 ppm solution, or the alkanoic acid was added to the pyrimethanil composition with a concentration of 2000 ppm.
Fruit: Bio-apple "Elstar"
Pathogen: *Penicillium expansum* PE110091 (pyrimethanil-tolerant)
Treatment: Curative
Repeats: Two wounds per fruit, 15 fruits per treatment
Start : 11 March 2014
Evaluations : 17 March (6 days), 20 March (9 days)
Average rot diameter untreated :

6 days : 21.3 mm
9 days : 36.0 mm

**Table 2**: % effect on pyrimethanil-tolerant fungus PE110091 challenged with pyrimethanil (0 and 100 ppm) and hexanoic acid (0 and 2000 ppm)

| **% effect after 6 days** | | observed | | |
|---|---|---|---|---|
| | *conc. ppm* | pyrimethanil | | |
| | | *0* | *100* | |
| hexanoic acid | *0* | 0 | 19 | exp |
| | *2000* | 15 | **42** | 31 |

(continued)

| % effect after 9 days | | observed | | |
|---|---|---|---|---|
| | *conc. ppm* | pyrimethanil | | |
| | | *0* | *100* | |
| hexanoic acid | *0* | 0 | 12 | exp |
| | *2000* | 6 | **24** | 17 |

In Table 2 it can be seen that hexanoic acid when tested alone at 2000 ppm has little fungicidal effect against the pyrimethanil-tolerant fungus PE110091 (column with 0 ppm pyrimethanil). When hexanoic acid is added to pyrimethanil, the observed % effect is higher than the expected % effect thereby demonstrating the ability of hexanoic acid to restore sensitivity to pyrimethanil.

## Claims

**1.** Method for controlling pyrimethanil-resistant fungi or pyrimethanil-tolerant fungi by contacting said fungi with a composition comprising a combination of pyrimethanil and an alkane carboxylic acid of formula $CH_3$-$(CH_2)_n$-COOH wherein n is 4 to 7 whereby the ratio by weight of pyrimethanil to the alkane carboxylic acid of formula $CH_3$-$(CH_2)_n$-COOH is from 1/10 to 1/100.

**2.** Method for protecting materials, plants, seeds, crops or fruits that are at risk of being infested with pyrimethanil-resistant fungi or pyrimethanil-tolerant fungi by contacting said materials, plants, seeds, crops or fruits with a composition comprising a combination of pyrimethanil and an alkane carboxylic acid of formula $CH_3$-$(CH_2)_n$-COOH wherein n is 4 to 7 whereby the ratio by weight of pyrimethanil to the alkane carboxylic acid of formula $CH_3$-$(CH_2)_n$-COOH is from 1/10 to 1/100.

**3.** Method of overcoming resistance to pyrimethanil in pyrimethanil-resistant or pyrimethanil-tolerant fungi comprising contacting the pyrimethanil-resistant or pyrimethanil-tolerant fungi with of a composition comprising a combination of pyrimethanil and an alkane carboxylic acid of formula $CH_3$-$(CH_2)_n$-COOH wherein n is 4 to 7 whereby the ratio by weight of pyrimethanil to the alkane carboxylic acid of formula $CH_3$-$(CH_2)_n$-COOH is from 1/10 to 1/100.

**4.** Method according to any one of claims 1 to 3 wherein the alkane carboxylic acid of formula $CH_3$-$(CH_2)_n$-COOH has n = 4.

**5.** Method according to any one of claims 1 to 3 wherein the alkane carboxylic acid of formula $CH_3$-$(CH_2)_n$-COOH has n = 5.

**6.** Method according to any one of claims 1 to 3 wherein the alkane carboxylic acid of formula $CH_3$-$(CH_2)_n$-COOH has n = 6.

**7.** Method according to any one of claims 1 to 3 wherein the alkane carboxylic acid of formula $CH_3$-$(CH_2)_n$-COOH has n = 7.

**8.** Method according to any one of claims 1 to 7 wherein the ratio by weight of pyrimethanil to the alkane carboxylic acid of formula $CH_3$-$(CH_2)_n$-COOH is from 1/25 to 1/75.

**9.** Method according to claim 8 wherein the ratio by weight of pyrimethanil to the alkane carboxylic acid of formula $CH_3$-$(CH_2)_n$-COOH is from 1/25 to 1/50.

**10.** Method according to any one of claims 1 to 9 wherein contacting comprises spraying, dipping or coating.

**11.** Use of a combination of pyrimethanil and an alkane carboxylic acid of formula $CH_3$-$(CH_2)_n$-COOH as defined in any one of the preceding claims for reducing resistance to pyrimethanil in the treatment of pyrimethanil-resistant fungi.

**12.** Use of a combination of pyrimethanil and an alkane carboxylic acid of formula $CH_3$-$(CH_2)_n$-COOH as defined in any

one of the preceding claims for restoring sensitivity against pyrimethanil in the treatment of pyrimethanil-resistant or pyrimethanil-tolerant fungi.

13. A composition for use in the treatment of pyrimethanil-resistant fungi comprising a combination of pyrimethanil and an alkane carboxylic acid of formula $CH_3-(CH_2)_n-COOH$ as defined in any one of the claims 1 to 9, and one or more carriers.

## Patentansprüche

1. Verfahren zur Bekämpfung pyrimethanilresistenter Pilze oder pyrimethaniltoleranter Pilze durch Inkontaktbringen der Pilze mit einer Zusammensetzung, die eine Kombination von Pyrimethanil und einer Alkancarbonsäure der Formel $CH_3-(CH_2)_n-COOH$ umfasst, wobei n für 4 bis 7 steht, wobei das Gewichtsverhältnis von Pyrimethanil zur Alkancarbonsäure der Formel $CH_3-(CH_2)_n-COOH$ 1/10 bis 1/100 beträgt.

2. Verfahren zum Schützen von Materialien, Pflanzen, Samen, Kulturen oder Früchten, bei denen das Risiko einer Infektion mit pyrimethanilresistenten oder pyrimethaniltoleranten Pilzen besteht, durch Inkontaktbringen der Materialien, Pflanzen, Samen, Kulturen bzw. Früchte mit einer Zusammensetzung, die eine Kombination von Pyrimethanil und einer Alkancarbonsäure der Formel $CH_3-(CH_2)_n-COOH$ umfasst, wobei n für 4 bis 7 steht, wobei das Gewichtsverhältnis von Pyrimethanil zur Alkancarbonsäure der Formel $CH_3-(CH_2)_n-COOH$ 1/10 bis 1/100 beträgt.

3. Verfahren zum Überwinden von Resistenz gegenüber Pyrimethanil in pyrimethanilresistenten oder pyrimethaniltoleranten Pilzen, umfassend das Inkontaktbringen der pyrimethanilresistenten bzw. pyrimethaniltoleranten Pilze mit einer Zusammensetzung, die eine Kombination von Pyrimethanil und einer Alkancarbonsäure der Formel $CH_3-(CH_2)_n-COOH$ umfasst, wobei n für 4 bis 7 steht, wobei das Gewichtsverhältnis von Pyrimethanil zur Alkancarbonsäure der Formel $CH_3-(CH_2)_n-COOH$ 1/10 bis 1/100 beträgt.

4. Verfahren nach einem der Ansprüche 1 bis 3, wobei in der Alkancarbonsäure der Formel $CH_3-(CH_2)_n-COOH$ n für 4 steht.

5. Verfahren nach einem der Ansprüche 1 bis 3, wobei in der Alkancarbonsäure der Formel $CH_3-(CH_2)_n-COOH$ n für 5 steht.

6. Verfahren nach einem der Ansprüche 1 bis 3, wobei in der Alkancarbonsäure der Formel $CH_3-(CH_2)_n-COOH$ n für 6 steht.

7. Verfahren nach einem der Ansprüche 1 bis 3, wobei in der Alkancarbonsäure der Formel $CH_3-(CH_2)_n-COOH$ n für 7 steht.

8. Verfahren nach einem der Ansprüche 1 bis 7, wobei das Gewichtsverhältnis von Pyrimethanil zur Alkancarbonsäure der Formel $CH_3-(CH_2)_n-COOH$ 1/25 bis 1/75 beträgt.

9. Verfahren nach Anspruch 8, wobei das Gewichtsverhältnis von Pyrimethanil zur Alkancarbonsäure der Formel $CH_3-(CH_2)_n-COOH$ 1/25 bis 1/50 beträgt.

10. Verfahren nach einem der Ansprüche 1 bis 9, wobei das Inkontaktbringen Spritzen, Eintauchen oder Beschichten umfasst.

11. Verwendung einer wie in einem der vorhergehenden Ansprüche definierten Kombination von Pyrimethanil und einer Alkancarbonsäure der Formel $CH_3-(CH_2)_n-COOH$ zum Reduzieren von Resistenz gegenüber Pyrimethanil bei der Behandlung von pyrimethanilresistenten Pilzen.

12. Verwendung einer wie in einem der vorhergehenden Ansprüche definierten Kombination von Pyrimethanil und einer Alkancarbonsäure der Formel $CH_3-(CH_2)_n-COOH$ zum Wiederherstellen von Empfindlichkeit gegenüber Pyrimethanil bei der Behandlung von pyrimethanilresistenten oder pyrimethaniltoleranten Pilzen.

13. Zusammensetzung zur Verwendung bei der Behandlung von pyrimethanilresistenten Pilzen, umfassend eine wie in einem der Ansprüche 1 bis 9 definierte Kombination von Pyrimethanil und einer Alkancarbonsäure der Formel

$CH_3$-$(CH_2)_n$-COOH und einen oder mehrere Träger.

**Revendications**

1. Méthode destinée à contrôler des champignons résistants vis-à-vis du pyriméthanil ou des champignons tolérants vis-à-vis du pyriméthanil, par la mise en contact desdits champignons avec une composition comprenant une combinaison de pyriméthanil et d'un acide alcane-carboxylique de formule $CH_3$-$(CH_2)_n$-COOH où n va de 4 à 7, où le rapport pondéral du pyriméthanil à l'acide alcane-carboxylique de formule $CH_3$-$(CH_2)_n$-COOH va de 1/10 à 1/100.

2. Méthode destinée à protéger des matériaux, des plantes, des graines, des cultures ou des fruits risquant d'être infestés par des champignons résistants vis-à-vis du pyriméthanil ou des champignons tolérants vis-à-vis du pyriméthanil, par la mise en contact desdit(e)s matériaux, plantes, graines, cultures ou fruits avec une composition comprenant une combinaison de pyriméthanil et d'un acide alcane-carboxylique de formule $CH_3$-$(CH_2)_n$-COOH où n va de 4 à 7, où le rapport pondéral du pyriméthanil à l'acide alcane-carboxylique de formule $CH_3$-$(CH_2)_n$-COOH va de 1/10 à 1/100.

3. Méthode destinée à surmonter une résistance vis-à-vis du pyriméthanil chez des champignons résistants vis-à-vis du pyriméthanil ou tolérants vis-à-vis du pyriméthanil, comprenant la mise en contact des champignons résistants vis-à-vis du pyriméthanil ou tolérants vis-à-vis du pyriméthanil avec une composition comprenant une combinaison de pyriméthanil et d'un acide alcane-carboxylique de formule $CH_3$-$(CH_2)_n$-COOH où n va de 4 à 7, où le rapport pondéral du pyriméthanil à l'acide alcane-carboxylique de formule $CH_3$-$(CH_2)_n$-COOH va de 1/10 à 1/100.

4. Méthode selon l'une quelconque des revendications 1 à 3, dans laquelle l'acide alcane-carboxylique de formule $CH_3$-$(CH_2)_n$-COOH présente un n = 4.

5. Méthode selon l'une quelconque des revendications 1 à 3, dans laquelle l'acide alcane-carboxylique de formule $CH_3$-$(CH_2)_n$-COOH présente un n = 5.

6. Méthode selon l'une quelconque des revendications 1 à 3, dans laquelle l'acide alcane-carboxylique de formule $CH_3$-$(CH_2)_n$-COOH présente un n = 6.

7. Méthode selon l'une quelconque des revendications 1 à 3, dans laquelle l'acide alcane-carboxylique de formule $CH_3$-$(CH_2)_n$-COOH présente un n = 7.

8. Méthode selon l'une quelconque des revendications 1 à 7, dans laquelle le rapport pondéral du pyriméthanil à l'acide alcane-carboxylique de formule $CH_3$-$(CH_2)_n$-COOH va de 1/25 à 1/75.

9. Méthode selon la revendication 8, dans laquelle le rapport pondéral du pyriméthanil à l'acide alcane-carboxylique de formule $CH_3$-$(CH_2)_n$-COOH va de 1/25 à 1/50.

10. Méthode selon l'une quelconque des revendications 1 à 9, dans laquelle la mise en contact comprend une pulvérisation, un trempage ou un enrobage.

11. Utilisation d'une combinaison de pyriméthanil et d'un acide alcane-carboxylique de formule $CH_3$-$(CH_2)_n$-COOH telle que définie selon l'une quelconque des revendications précédentes, destinée à réduire la résistance vis-à-vis du pyriméthanil dans le traitement de champignons résistants vis-à-vis du pyriméthanil.

12. Utilisation d'une combinaison de pyriméthanil et d'un acide alcane-carboxylique de formule $CH_3$-$(CH_2)_n$-COOH telle que définie selon l'une quelconque des revendications précédentes, destinée à la restauration de la sensibilité vis-à-vis du pyriméthanil dans le traitement de champignons résistants vis-à-vis du pyriméthanil ou tolérants vis-à-vis du pyriméthanil.

13. Composition pour une utilisation dans le traitement de champignons résistants vis-à-vis du pyriméthanil, comprenant une combinaison de pyriméthanil et d'un acide alcane-carboxylique de formule $CH_3$-$(CH_2)_n$-COOH telle que définie selon l'une quelconque des revendications 1 à 9, et un ou plusieurs véhicules.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2010137337 A


### Non-patent literature cited in the description


- **GREEN et al.** *Pesticide Science,* 1998, vol. 54 (3), 313-314
- **COLBY S.R.** *Weeds,* 1967, vol. 15 (1), 20-22
- **LIMPEL, L.E. et al.** Weed control by dimethyl tetrachloroterephthalate alone and in certain combinations. *Proceedings of the N. E. Weed Control Conference,* 1962, vol. 16, 48-53